Europäisches Patentamt

(19) European Patent Office

Office européen des brevets

(11) Publication number: **0 038 611**
**B1**

(12) **EUROPEAN PATENT SPECIFICATION**

(45) Date of publication of patent specification: **07.12.83** (51) Int. Cl.³: **B 01 D 13/00**

(21) Application number: **81200530.4**

(22) Date of filing: **13.09.79**

(60) Publication number of the earlier application in accordance with Art. 76 EPC: **0009374**

(54) Hollow filament separatory modules and methods of making such modules.

(30) Priority: **19.09.78 US  943793**
**19.09.78 US  943738**
**19.09.78 US  943739**
**30.10.78 US  956032**

(43) Date of publication of application:
**28.10.81 Bulletin 81/43**

(45) Publication of the grant of the patent:
**07.12.83 Bulletin 83/49**

(84) Designated Contracting States:
**AT BE CH DE FR GB IT LU NL**

(56) References cited:
**FR - A - 2 193 633**
**FR - A - 2 361 452**
**GB - A - 1 380 393**
**GB - A - 1 400 774**
**US - A - 3 422 008**
**US - A - 3 455 460**
**US - A - 3 870 637**
**US - A - 4 045 851**
**US - A - 4 061 574**
**US - A - 4 105 731**

(73) Proprietor: **ALBANY INTERNATIONAL CORP.**
**1 Sage Road**
**Menards New York 12201 (US)**

(72) Inventor: **Bilewski, Fred**
**13 Oak Street**
**Medway Massachusetts 02053 (US)**
Inventor: **Burchesky, Robert D.**
**15 Corbett Avenue**
**Dedham Massachusetts 02026 (US)**
Inventor: **Coplan, Myron J.**
**47 Speen Street**
**Natick Massachusetts 01760 (US)**
Inventor: **Sebring, Robert E.**
**17 Orchard Circle**
**Westwood Massachusetts 02090 (US)**

(74) Representative: **Jennings, Roy Alfred et al,**
**GILL JENNINGS & EVERY 53-64 Chancery Lane**
**London WC2A 1HN (GB)**

Courier Press, Leamington Spa, England.

## Hollow filament separatory modules and methods of making such modules

The use of permeable or semi-permeable membranes to effect separation of gas/gas, liquid/liquid, and liquid/solid mixtures and solutions has achieved general industrial applicability. In general, membranes are contained in vessels called modules, comprising a container having various inlet and outlet ports and an assembly of membranes within said container. The internal configurations of the membranes and of the vessel are so arranged as to permit the introduction of a feed stream with or without pressure on the upstream faces of the membranes and to include means for collecting permeate which passes through the membranes and emerges on their downstream faces, and means are provided for keeping feed and permeate materials from commingling.

Membranes have been fabricated in the form of open-ended hollow tubular filaments so arranged and sealed into header plates as to provide a separation of the flow over the external surfaces of the hollow filaments from the flows within the bores of the hollow filaments.

The filaments or fibres may be used of diameters consistent with the flow requirements of high flux membranes. For example, it is possible to use filaments or fibres with diameters of as little as 100 micrometers or as much as 500 micrometers or more. The specific dimensions of length and diameter of the fibres can be very important, depending upon the intended use of the module. In reverse osmosis applications, we prefer fibres of at least about 250 micrometers in diameter. Additionally, by winding the fibres in a helical fashion with adjacent layers wound to opposite hands there is provided more uniform distribution of the channel spaces and surfaces of the fibres usable for separation.

Thus, while conventional constructions have used 50-100 micrometres as the typical range of outside diameter for the hollow fine fibre membranes, we prefer the hollow fibres to have diameters of 250 micrometres or more. Indeed, in some cases we have made very successful use of fibres of over 500 micrometers outside diameter.

In this approach to the utilisation of fibres of large and controlled ranges of diameter, we have used as a preferred embodiment of composite hollow fibre comprising a porous substrate, overcoated with a selected high filtration rejection barrier.

US - A - 4,061,574 discloses a hollow filament module in which the ends of the hollow filaments are encapsulated in potting compound. In order to open the ends of the hollow filaments within the potting compound as is necessary, a large number of bores are drilled through the potting compound and the end of the potting compound may be machined off to open up some of the bores so that they form grooves across the end face of the potting compound. However, in order to open up the fibres sufficiently using the drilling, or drilling and machining technique disclosed in this specification, it is necessary that the area in cross-section of the potting compound drilled away shall be a major proportion of the whole cross-sectional area of the potting compound so that only a small area of the potting compound remains to resist the internal pressure forces which act upon the exposed end of the compound when the module is in operation.

The object of the present invention is to construct a separatory module of the same general type as that disclosed in US - A - 4,061,574 in such a way that the internal pressure forces can be effectively resisted.

According to this invention a hollow filament separatory module comprises in combination a bundle of filaments consisting of a plurality of layers of semi-permeable hollow filaments, each layer being disposed in a helix, a pressure resistant enclosure enclosing the bundle, first and second end plates at the ends of the enclosure, the filaments having open ends and main portions, means for isolating the open ends from the main portions, first flow means for causing fluid to flow in contact with the outer surfaces of said filaments at the main portions thereof, second flow means for causing fluid to flow within the hollow filaments and through the open ends thereof, the second flow means including a potting compound encasing the open ends of the filaments, a collection chamber adjacent the potting compound, an access surface formed on said potting compound in which access surface said open ends of said filaments appear, and a non-access surface provided on said potting compound to form a pressure-resisting surface which is generally perpendicular to the direction of internal pressure forces acting against said potting compound in order to resist said internal pressure forces which are developed in the module during use, said non-access pressure resisting surface being spaced from said open ends of said filaments which are at different elevations from said surface, the sum total area of the access surface when projected upon a plane perpendicular to the direction of said internal pressure forces against said potting compound being less than 50% of the area of said non-access surface and said non-access surface bearing against a face or faces within said enclosure to provide said resistance to said internal pressure forces.

This construction has the advantages firstly that the module internal pressure acting against the filament potting compound is resisted by a surface of the potting compound in which no cut filament or fibre ends appear. Secondly, the surface of the potting compound which supports the thrust developed by the internal hydraulic pressure 15 at right angles to the principal axis of the module (i.e. generally parallel to the surface of the potting compound which faces inwards towards the pressurised region of the module). Thirdly, cut ends of fibres which form outlets for the permeate flow are located in access surfaces within the potting compound at a different elevation from, and optionally at an angle to, the surface of the potting compound required to take the pressure thrust.

The feature that the sum total area of the access surface when projected upon a plane perpendicular to the direction of internal pressure forces against the potting compound is less than 50% of the area of the cross section of the non-access portions of the potting compound parallel to said plane results in very little decrease in the compressive strength of the potting compound.

The present invention also consists, according to another of its aspects, in a method of making a module in accordance with the invention comprising winding the hollow filaments to produce the bundle and, after winding, encapsulating one end of the bundle in a potting compound and cutting filaments within the compound to produce filament ends while removing portions of the compound to expose the cut filament ends to provide an access surface in which said cut filament ends appear and a non-access surface provided on said potting compound to form a pressure-resisting surface which is generally perpendicular to the direction of internal pressure forces acting against said potting compound in order to resist said internal pressure forces which are developed in the module during use, said non-access pressure resisting surface being spaced from said open ends of said filaments which are at different elevations from said surface, the sum total area of the access surface when projected upon a plane perpendicular to the direction of said internal pressure forces against said potting compound being less than 50% of the area of said non-access surface and said non-access surface bearing against a face or faces within said enclosure to provide said resistance to said internal pressure forces, and wherein, during the winding of the filaments, a deposit of a rubbery cement is made at generally the same axial position in the bundle so that upon completion of the winding of the bundle there exists within it a barrier of the cement separating the portions of the filaments which are subsequently embedded in the compound from the remainder of their lengths thereby impeding undesirable migration of uncured potting compound by capillarity among the filaments during the encapsulation.

It is another preferred feature of the invention that the annular bundle of filaments is self-supporting. Whereas the prior art describes in some instances helical bundles, these are generally firmly and permanently associated with a winding shaft or tube originally comprising the mandrel surface. Contrary to that, we have found superior results in both the winding and subsequent handling of the fibre or filament bundle preparatory to potting and the like, by use of a collapsible and expansible sleeve as the surface immediately upon which the first wraps of the bundle are wound. This sleeve may be a braided tube of yarn, for example. Said sleeve is secured over the winding shaft for a distance greater than the axial length of the annulus for support of the inner surface of the annulus. An additional length of the expansible sleeve sufficient to provide a continuous protective surface for the external fibres of the annulus, rolled around one end of the annulus, may also be carried on the winding shaft. When a sleeve used, a zone of the sleeve has the adhesive applied thereto so that migration of the potting compound in the sleeve is obstructed in the same axial position as it is impeded among the filaments.

The invention will be further described by way of example with reference to the accompanying drawings, in which:—

Figure 1 is a perspective view of one example of a hollow filament separatory module in accordance with the invention;

Figure 2 is a partially sectional longitudinal view of the module shown in Figure 1 taken along the line 2—2 in the direction of the arrows therein;

Figures 3, 4 and 5 are transverse sectional views taken respectively along the line 3—3, 4—4 and 5—5 in the direction of the arrows in Figure 2;

Figure 6 is an exploded perspective view of a cylindrical winding support shaft and collapsible expansible sleeve about which hollow filaments are wound during the fabrication of the fibre bundle of the module shown in Figure 1;

Figure 7 is a perspective view of the support shaft with the sleeve in position thereon prior to winding.

Figure 8 is a perspective view of the support shaft and sleeve with the fibre helix being wound thereon to provide the fibre bundle;

Figure 9 is a perspective view illustrating the removal of the support shaft and stretching and folding of the sleeve after completion of the winding of the bundle;

Figures 10, 11 and 12 are partially diagrammatic longitudinal segmentary views illustrating the winding respectively of the first, an intermediate and the final or outer wrap in the annular fibre bundle;

Figure 13 is a diagrammatic view of inner, outer and intermediate wraps forming the bundle illustrating the location in each of these wraps where the fibre of the respective wrap crosses the fibre of the previous wrap or layer in the completed bundle;

Figure 14 is a perspective view illustrating the relative positions of the annular bundle, and the collapsible and expansible sleeve in the completed bundle;

Figure 15 is a partially sectional longitudinal view of the completed bundle positioned in a mould during the potting operation wherein an end of the annular bundle of fibres is encapsulated;

Figure 16 is a partially sectional view of another embodiment of the invention wherein the fibre access surface planes in the potting compound are obtained in a different manner;

Figure 17 is a partially sectional view wherein still another method of obtaining fibre access surface planes is shown.

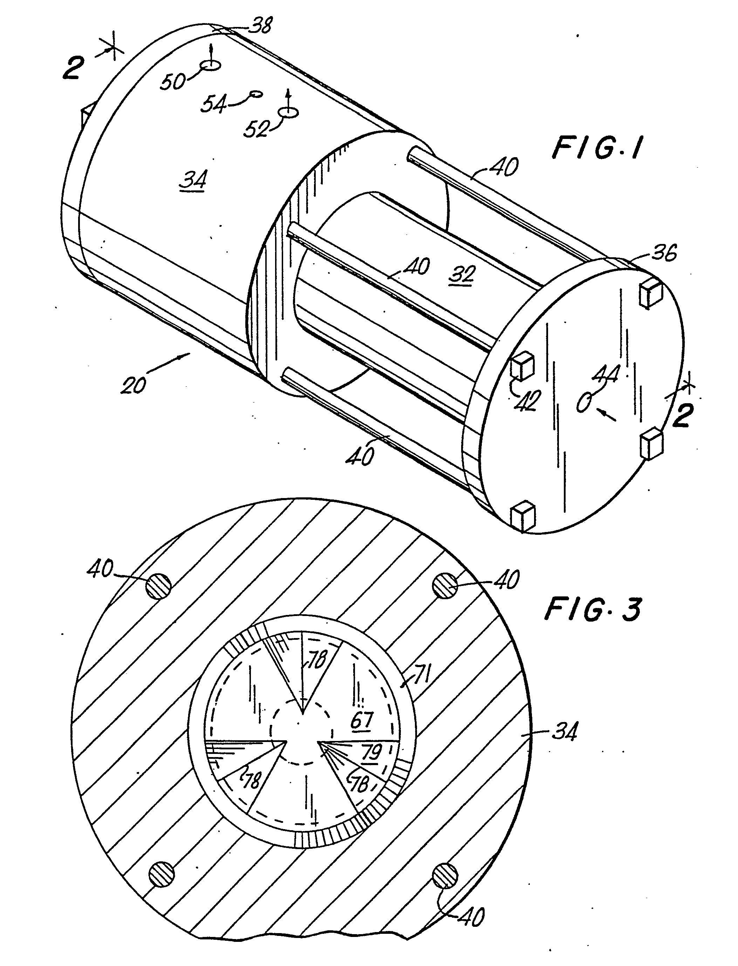

A module constructed in accordance with this invention is designated in the drawings, generally by the numeral 20. The module in completed form is seen in Figures 1 to 5 and includes an annulus 22 formed of wound permeable hollow filaments and braid sleeve 26 folded over to sandwich the filaments for the most part between inner and outer sleeve sections 26a and 26b with solid rod 28 projecting within and occupying annulus core 30.

The specific manner in which the annulus is wound is described in detail below. The fibres which are of relatively large diameter are wound in helical fashion with adjacent layers wound in opposite hand. There is relatively uniform distribution of the large diameter fibres and the channel spaces and surfaces of the fibres usable for separation. In the preferred embodiment the hollow fibres are 250 micrometers or greater in outside diameter. In certain applications 500 micrometers outside diameter is preferred. Although any suitable hollow fibre can be used, the preferred embodiment contemplates a composite hollow fibre comprising a porous substrate, overcoated with a selected high filtration rejection barrier.

The annulus 22 is encased within pressure resistant shell 32 and pressure sleeve 34 between end plates 36 and 38 held in position by stringers 40 passing through holes 42 formed in the end plates. Axial feed-in port 44 is provided in end plate 36 to allow the fluid which is being operated upon to wash the outside of the fibres 22 after passing through prefilter 46 and perforated disc 48. In certain applications either or both prefilter 46 and disc 48 can be omitted. In the preferred embodiment prefilter 46 is a felt structure through which the liquid can pass and disc 48 is a rigid plastic member.

The pressure sleeve 34 is provided with radial ports 50 and 52 which respectively provide outlets for permeate and concentrate. Port 54 functions as a weep hole. Suitable O-rings 56, 58, 60, 62 and 64 are provided. The end of the annulus 22 within pressure sleeve 34 is encased in potting compound 66 as will be described below.

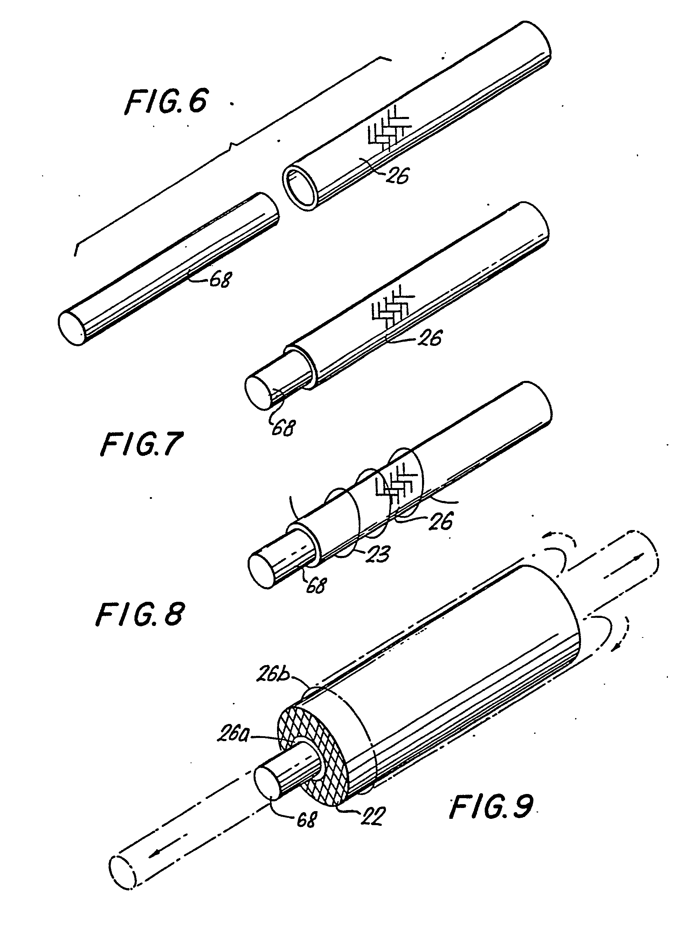

The manner of winding annulus 22 is seen in Figures 6 through 14. Collapsible expansible braided sleeve 26 is secured over suitable winding shaft 68 for a distance greater than the axial length of the annulus to support the inner surface of the annulus. This is the surface immediately upon which the first wraps of the bundle 22 are wound. An additional length of expansible sleeve sufficient to provide a continuous protective surface for the external surface of the annulus, rolled around one end of the annulus, is provided.

In the preferred method of preparing fibre bundles according to the present invention, the hollow fibres are wound continuously in alternating helices starting on a small diameter shaft, building an annular bundle. The path length of fibre forming a helix from one end of the bundle to the other is a function of the radial position of the fibre in the annulus and its helix angle. Therefore, unless appropriate adjustments are made in the relative speed of rotation of the winding shaft and the end-to-end traverse speed of the bundle of filaments during the winding, there will be a continuously increasing length of fibre in any pass between the two ends of the bundle as the radial position increases. We select pre-calculated limits for the specific ratio of the rotational velocity of the winding mandrel and the reciprocating traverse mechanism, and lay down helices at selected radial positions in the annulus varying very slightly in respect to their length. For example, a helix length from the innermost to the outermost regions of the annulus never varying more than 10% around the optimum length is preferred and readily achieved.

A series of discrete ratios of the winding and traverse rates is selected and changed from one ratio to the next during the winding at predetermined annular positions thus avoiding the building up of hills and valleys.

In the Figures the first layer of helical winding by way of example is indicated by the numeral 23, a second by the numeral 24 and a third by the numeral 25, there being adjacent intermediate unindicated windings wound in opposite hand.

This solves problems present in conventional modules regarding the pressure losses associated with bore flow within a hollow fibre and takes into account fibre length and bore diameter. This avoids an increase in percent salt passage and a decrease in the effective use of surface of the fibre in respect to the nominal "zero"-length flux and flux and rejection are not diminished because fibres are "too long" relative to their bore size and inherent permeation rate.

Upon completion of the winding operation the outer end 26b of the braid is wrapped over the annulus 22 with the inner end 26a of the braid left within and the mandrel 68 removed exposing bore 30.

After winding, one end of annulus 22 is encapsulated in potting compound 66. The art of casting fibrous and other materials into a common matrix is well known and referred to as "potting". It is also well known to select potting compounds of which epoxies are but one example, so that their compatibility with fibres or other materials to be encapsulated makes for intimate bonding in the interfaces between the fibres or particles, and the encapsulating compound. Thus in the case of hollow fibres to be sealed in the potting compound 66 it would be most desirable that the fibre surfaces be wet well by the potting compound in its prepolymerised fluid form. As a natural consequence of good wettability of the fibres by the potting compound before it is cured, there will be a tendency for the potting compound in its precured state to migrate by capillarity among the fibres, perhaps to considerable distance beyond the position where it would be useful for the cured potting compound to be. In the potting this would lead to occlusion and loss of membrane surface of some of the fibre, possible pockets of unsealed regions, and unnecessary utilisation of epoxy compound.

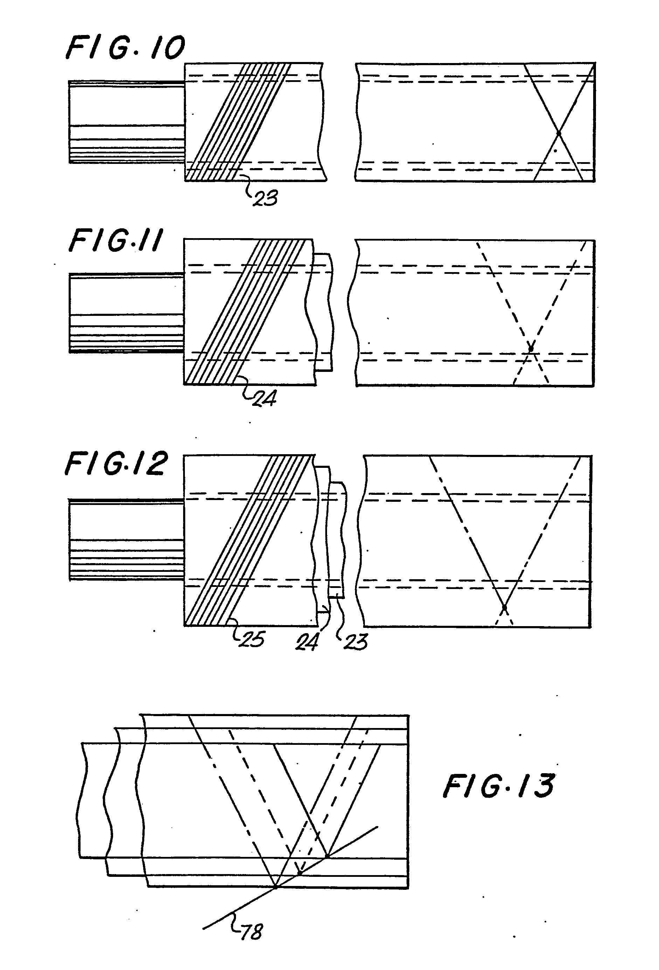

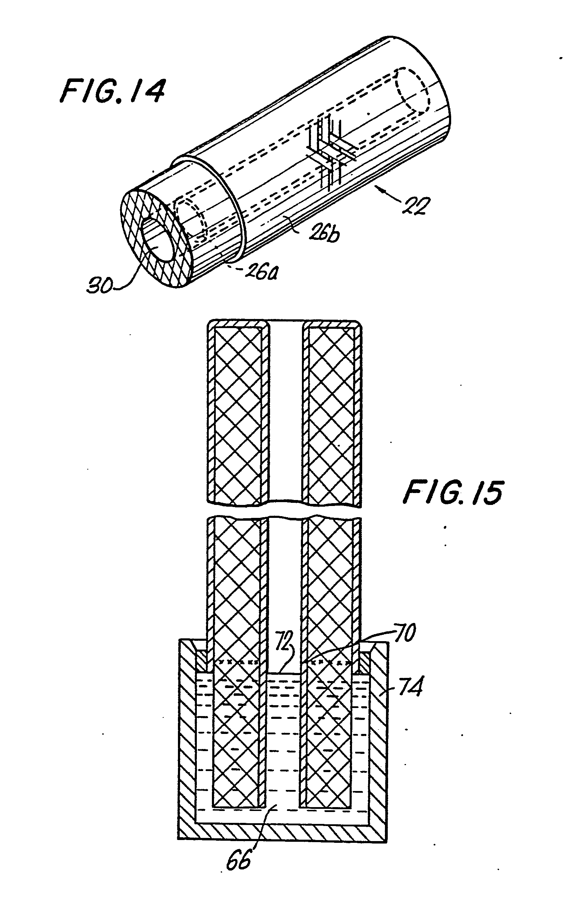

In the subject invention a ring of rubbery cement as indicated in Figure 15 by the numeral 70 is applied to the extensible sleeve member on the winding shaft 68 during the winding operation at a position that will corrrespond ultimately to the upper regions 72 of the potting compound 66 when it is later placed in mould 74 as shown in Figure 5. Then during the winding of the fibres on first the extensible sleeve and subsequently on top of the preceding fibre wraps as shown in Figures 10—13, a continuous deposit of the same rubbery cement is made at generally the same axial position in the annulus. At the completion of the winding of the entire annulus, there exits with it a substantially doughnut or O-ring barrier membrane of the rubbery cement in the plane generally designated by numeral 70 in Figure 15, separating the portion of the fibres which will ultimately become imbedded in the potting compound from the remainder of their lengths. In the same sense, the end of inner extensible sleeve member 26a also has the barrier membrane, applied thereto, so that if it too has a capability for inducing capillary migration of the precured potting compound, said capillarity would be obstructed at the same axial point of position.

The completion of the potting operation after winding is illustrated in Figure 15 with the mould and potting compound designated respectively by the numerals 74 and 66. The uncured potting compound 66 in mould 74 is subject to vibration from subsonic to ultrasonic frequencies by a suitable impulsive device, such as a vibrating hammer or ultrasonic transducer, not shown. The fibre bundle 22 is immersed into the mould 74 containing the precured potting compound 66 which, under the urging of the fibratory energy supplied to the mould, tends to migrate within and fill the interstices of the bundle with much greater ease than would have been secured by gravity alone.

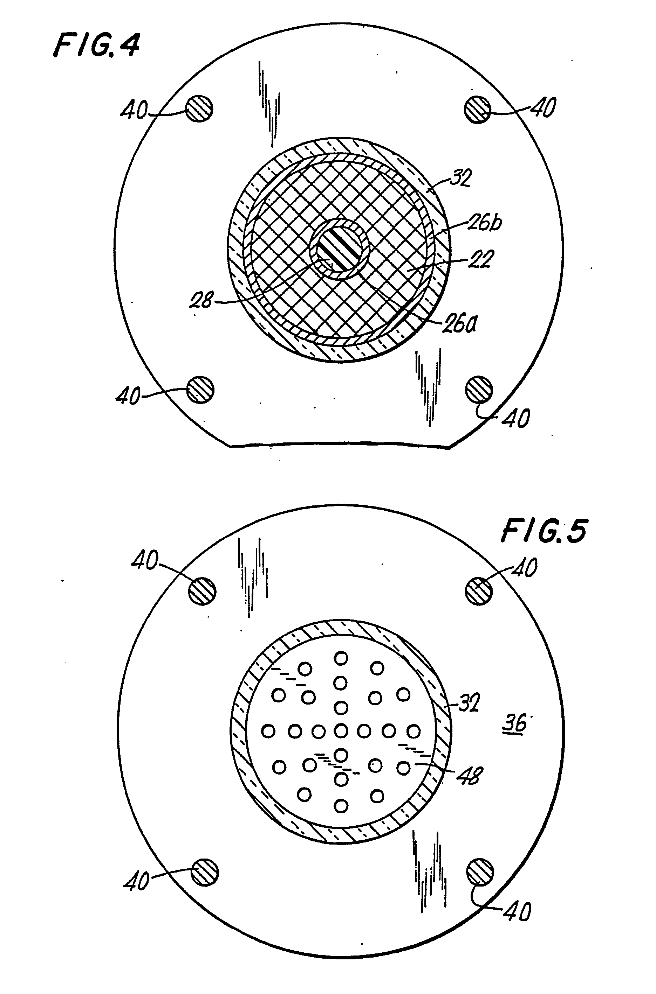

After potting, the fibres of the annulus must be opened so that permeate within the individual bores thereof can be received and collected in the collection chamber or annular gallery 71 provided in the mould potting compound, for removal through port 50. A feature of the subject invention is to provide that the internal pressure force developed in the module during use and acting against the fibre potting compound 66 is resisted by a surface of the potting 66 in which no fibres end. The number 67 in Figure 3 designates this surface. Additionally the surface 67 of the potting supports the thrust developed by the internal hydraulic pressure acting against the inwardly facing surface of the potting.

In the subject invention ends of fibres which are cut or exposed to provide exit for the permeate flow are in access surfaces within the potting compound at a different elevation from, and optionally at a different angle to, the surface of the potting compound required to take the pressurising thrust force, or both.

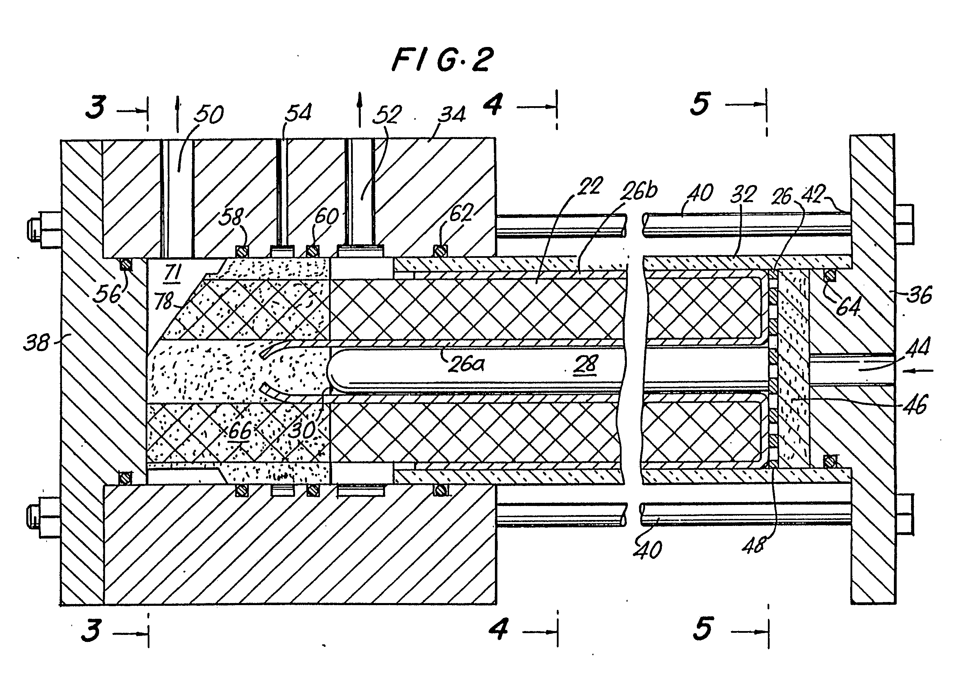

We have found that if a number of angular slices are made into the end of the cylinder of fibre-containing potting in the manner shown in Figures 2 and 3, all fibres will have open ends exposed to gallery 71.

As seen in Figure 3, the three v-shaped slices comprise six access surfaces, 79, lying at an oblique angle to the base of the potting compound. These access surface planes resulting from the cutting communicate with the annular gallery within the low pressure region of the assembled module, providing thereby ready access to the permeate collection system. The creation of the planes by cutting of the potting compound is accomplished in the preferred embodiment at a time in the curing cycle of the potting compound prior to its final cure. By the selection of a potting compound and control of the time and temperature after immersion of the fibre bundle in the mould, the potting compound achieves a state in which it is readily cut without creation of unwanted detritus to block the fibre openings yet of sufficient resilient integrity to slice cleanly by means of a sharp-edged blade. After cutting, cure of the potting compound is completed by heat and/or the passage of time.

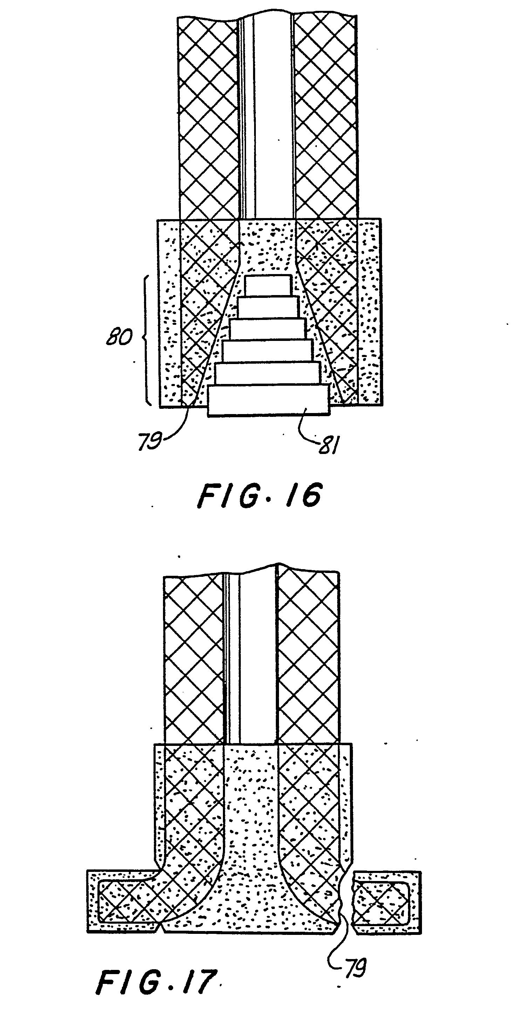

An alternative embodiment of the invention directed toward the creation of cut fibre ends in an access surface plane of the potting compound is shown in Figure 16. In this example, the fibre helix bundle is wound in such a way that at one end the helix wrapping takes a continuously increasingly steeper angle, forming a conical taper inner surface over a distance indicated by the bracketed length marked "80" in Figure 16. When this conically tapered end of the annular array of fibres is potted in a mould, it is mounted along with a stepped plug 81, in such a way that the potting compound encapsulates concurrently the end of the fibre bundle and the plug. After curing, a narrow annular access surface, 79, is machined into the potting compound at an elevation above the support surface provided by the plug.

Still another embodiment of our invention is illustrated by Figure 17. Here, a wound bundle of filaments is prepared having loops at one end extending at right angles to the main axis of the bundle. This can be accomplished, for example, by mounting on the winding mandrel a thin, disclike member several inches larger in diameter than the mandrel. During the winding operation, the traverse of the yarn is carried axially beyond said disc so that there is a section of yarn from each loop of the wind that passes over the extreme edge of the disc before the yarn direction is reversed. The result of such a winding process is to provide at one end of the helically wound bundle a flange-like circular array of fibres whose axes at that point lie generally at right angles to the annulus axis. Later, the entire flange-like circular array of fibres plus an additional region axially inward of said array become the site for the infusion of potting compound. The mould for such an assemblage provides means for creating segments in the potting compound with fibres of the flange-like bundle extension lying in said segments of potting compound. After the full cure of said potting compound, it is possible to create open fibre ends in the fibre lengths lying at right angles to the main axis of the annulus by shearing off the segmented zones of potting compound in which the flange-like array of fibres has been embedded. Thus an access plane 79, will be created where each such segmented zone of potting compound has been fractured from the body of the pot. Open ends of fibres will again be found in planes lying at some angle, generally at a right angle, to the surface against which the thrust on the potting compound is applied during module operation.

A preferred feature of the subject invention concerns the sealing of the pressurised concentrate regions of the module separate from the permeate collection regions of the module.

The permeate collection chamber 75 is sealed apart from the pressurised concentrate region of the potting compound by "O"-rings 56 and 58 with weephole 54 additionally protected by O-ring seal 60 to allow any leak of concentrate to exit the module assembly without inadvertently commingling with the permeate. The pressurised concentrate is removed at port 52 which is sealed by O-rings 60 and 62. Although the "O"-rings are hidden during operation of the module, any leakage past them can readily be detected and corrective action taken.

The O-rings 58 and 60 define an intermediate zone between the collection zone containing the collection chamber 71 and the pressurised zone which is surrounded by the pressure resistant shell 32.

In the prior art modules the pressure shell has been a cylindrical chamber in view of the accepted manner of resisting the high hydrostatic pressures. The requirement has been imposed on the shell to accept both the hoop stress loadings and axial loading developed by connections to the end plates. In addition, the end plates were frequently mounted to the shell and connected by snap rings or the like, which carried the thrust on the end plates to shell surface through grooves or some other connective ridges or the like. This required that the shell be of substantial thickness and mechanical integrity in all directions. Stringer bolts 40 secure the two end plates 36 and 38 of the pressure cylinder to one another, thereby eliminating axial stress on the shell. By use of these stress-brearing stringer members, problems associated with connecting end plates to the shell by snap rings and the like are also eliminated. These features allow for simpler fabrication of the shell itself and the assembly and disassembly of the entire system, as well as access to its internal parts.

**Claims**

1. A hollow filament separatory module comprising in combination a bundle of filaments (22) consisting of a plurality of layers of semipermeable hollow filaments, each layer being disposed in a helix, a pressure resistant enclosure (32, 34) enclosing the bundle, first and second end plates (36, 38) at the ends of the enclosure, the filaments having open ends and main portions, first flow means (44, 56) for causing fluid to flow in contact with the outer surfaces of said filaments at the main portions thereof, second flow means for causing fluid to flow within the hollow filaments and through the open ends thereof, the second flow means including a potting compound (66) encasing the open ends of the filaments, a collection chamber (71) adjacent the potting compound, an access surface (79) formed on said potting compound (66), in which access surface said open ends of said filaments appear, and a non-access surface (67) provided on said potting compound to form a pressure-resisting surface which is generally perpendicular to the direction of internal pressure forces acting against said potting compound (66) in order to resist said internal pressure forces which are developed in the module during use, said non-access pressure resisting surface (67) being spaced from said open ends of said filaments which are at different elevations from said surface (67), the sum total area of the access surface (79) when projected upon a plane perpendicular to the direction of said internal pressure forces against said potting compound being less than 50% of the area of said non-access surface and said non-access surface being against a face or faces within said enclosure to provide said resistance to said internal pressure forces.

2. A module according to Claim 1, in which said open ends are at an angle with respect to said pressure resisting surface (67).

3. A module according to Claim 1 or Claim 2, in which the potting compound (66) transmits the internal pressure faces directly to said second end plate (38).

4. A module according to Claim 1, in which the pressure resisting surface is an end surface (67) and wherein the access surface is provided by a plurality of slices made in said potting compound from said end surface upwardly and outwardly exposing said open ends to said collection chamber.

5. A module according to Claim 4, in which said end surface (67) abuts said second end plate.

6. A method of making a module in accordance with Claim 1, comprising winding the hollow filaments to produce a bundle and, after winding, encapsulating one end of the bundle in a potting compound and cutting filaments within the compound to produce filament ends while removing portions of the compound to expose the cut filament ends to provide an access surface in which said cut filament ends appear, and a non-access surface (67) provided on said potting compound to form a pressure-resisting surface which is generally perpendicular to the direction of internal pressure forces acting against said potting compound (66) in order to resist said internal pressure forces which are developed in the module during use, said non-access pressure resisting surface (67) being spaced from said open ends of said filaments which are at different elevations from said surface (67), the sum total area of the access surface (79) when projected upon a plane perpendicular to the direction of said internal pressure forces against said potting compound being less than 50% of the area of said non-access surface and said non-access surface bearing against a face or faces within said enclosure to provide said resistance to said internal pressure forces, and wherein, during the winding of the filaments, a deposit of a rubbery cement is made at generally the same axial position in the bundle so that upon completion of the winding of the bundle there exists within it a barrier of the cement separating the portions of the filaments which are subsequently embedded in the compound from the remainder of their lengths thereby impeding undesirable migration of uncured potting compound by capilarity among the filaments during the encapsulation.

7. A method according to Claim 6, in which prior to winding, an expansible sleeve is secured over a winding mandrel to support the inner surface of the bundle and a zone of the sleeve has the adhesive applied thereto so that migration of the potting compound in the sleeve is obstructed in the same axial position as it is impeded among the filaments.

8. A method of making a module in accordance with Claim 1, comprising winding the hollow filaments to produce the filament bundle and, after winding, inserting one end of the filament bundle into a mould, introducing a thermal cure potting compound step by step into the filament bundle in the mould to cause the potting compound to fill the interstices of the bundle and encapsulate the end of the bundle in the potting compound and thereafter cutting through the potting compound to remove portions of the compound to provide said access and said non-access surfaces, the cutting of the potting compound taking place at a time in the curing cycle of the potting compound prior to its final cure.

**Patentansprüche**

1. Hohlfasertrennungsmoduln mit der Kombination eines Faserbündels (22), das aus einer Vielzahl von Schichten semipermeabler Hohlfasern besteht, wobei jede Schicht in einer Helix angeordnet ist und ein druckfestes Gehäuse (32, 34) das Bündel, erste und zweite Endplatten (36, 38) an den Enden des Gehäuses einfaßt, und wobei die Fasern offene Enden und Hauptteile besitzen und erste Durchflüsse (44, 56), die in Kontakt mit den Außenflächen der Fasern an deren Hauptteilen stehen, um einen Strömungsmittelfluß zu bewirken, und wobei zweite Durchflüsse einen Strömungsmittelfluß innerhalb der Hohlfasern und durch deren offene Enden hindurch bewirken, wobei die zweiten Durchflüsse eine Potting-Verbindung (66) umfassen, die die offenen Enden der Fasern umschließen sowie eine Sammelkammer (71), die an die Potting-Verbindung angrenzt, eine auf der Potting-Verbindung ausgebildete Zugangsfläche (79), in welcher die offenen Enden der Fasern erscheinen, und wobei eine Nicht-Zugangsfläche (67) auf der Potting-Verbindung unter Ausbildung einer druckfesten Fläche vorgesehen ist, die im wesentlichen senkrecht zur Richtung der Innendruckkräfte liegt, die gegen die Pottingverbindung drücken, um den Innendruckkräften zu widerstehen, die im Modul während des Betriebs entstehen, und wobei die druckfeste Zugangsfläche (67) von den offenen Enden der Fasern beabstandet sind, die in unterschiedlichen Höhen von der Fläche (67) liegen, und wobei der summierte Gesamtbereich der Zugangsfläche (79) geringer als 50% des Bereiches der Nicht-Zugangsfläche ist, wenn sie auf eine Ebene senkrecht zur Richtung der Innendruckkräfte gegen die Potting-Verbindung projiziert wird, wobei die Nicht-Zugangsfläche gegen eine Fläche oder Flächen innerhalb des Gehäuses anliegt, um den Widerstand gegen die Innendruckkräfte aufzubauen.

2. Modul nach Anspruch 1, dadurch gekennzeichnet, daß die offenen Enden zur druckfesten Fläche (67) gewinkelt sind.

3. Modul nach Anspruch 1 oder 2, dadurch gekennzeichnet, daß die Potting-Verbindung (66) die Innendruckflächen direkt auf die zweite Endplatte (38) überträgt.

4. Modul nach Anspruch 1, dadurch gekennzeichnet, daß die druckfeste Fläche eine Endfläche (67) ist, und daß eine Zugangsfläche durch eine Vielzahl von Scheiben bzw. Lagen vorgesehen sind, die in der Potting-Verbindung von der Endfläche nach oben und nach außen gebildet sind, wobei die offenen Enden zur Sammelkammer freiliegen.

5. Modul nach Anspruch 4, dadurch gekennzeichnet, daß die Endfläche (67) an die zweite Endplatte anstößt.

6. Verfahren zur Herstellung von Hohlfasermoduln nach Anspruch 1, dadurch gekennzeichnet, daß die Hohlfasern unter Herstellung eines Bündels gewickelt werden, und daß nach dem Wickeln ein Ende des Bündels in einer Pottingbzw. Vergußverbindung umhüllt wird, und die Fasern innerhalb der Verbindung aufgeschnitten werden, um Faserenden herzustellen, während Teile der Verbindung entfernt werden, um die abgeschnittenen Faserenden freizulegen und eine Zugangsfläche zu schaffen, in der die abgeschnittenen Faserenden erscheinen, und eine Nicht-Zugangsfläche (67) auf der Potting-Verbindung vorgesehen wird, um eine druckfeste Fläche zu schaffen, die im wesentlichen senkrecht zur Richtung der Innendruckkräfte ist, die gegen diese Potting-Verbindung (66) wirken, um den Innendruckkräften zu widerstehen, die im Modul während des Betriebs entstehen, wobei die druckfeste Nicht-Zugangsfläche (67) von den offenen Enden der Fasern beabstandet ist, die in verschiedenen Höhen von der Fläche (67) sind, und daß der summierte Gesamtbereich der Zugangsfläche (79), wenn er auf eine Ebene senkrecht zur Richtung der Innendruckkräfte gegen die Potting-Verbindung projiziert wird, geringer als 50% des Bereiches der Nicht-Zugangsfläche ist, und daß die Nicht-Zugangsfläche gegen eine Fläche oder Flächen innerhalb der Umhüllung bzw. des Gehäuses aufliegt, um den Widerstand gegen die Innendruckkräfte vorzusehen, und daß während der Wicklung der Fasern eine Auflage eines Kautschukzementes im wesentlichen in der gleichen axialen Stellung im Bündel vorgenommen wird, so daß nach Vervollständigung der Wicklung des Bündels darin eine Zementbarriere vorhanden ist, die die Teile der Fasern trennt, die aufeinanderfolgend in die Verbindung vom Übrigen ihrer Längen eingebettet werden, wodurch eine unwünschenswerte Wanderung der nicht-gehärteten Potting-Verbindung durch Kapillarwirkung unter den Fasern während der Umhüllung bzw. Einkapselung verhindert wird.

7. Verfahren nach Anspruch 6, dadurch gekennzeichnet, daß vor der Wicklung eine dehnbare Hülle bzw. Hülse über dem Wickeldorn befestigt wird, um die Innenfläche des Bündels zu tragen, und daß ein Bereich der Hülle ein darauf aufgetragenes Klebemittel besitzt, so daß die Migration bzw. Wanderung der Potting-Verbindung in der Hülse in der gleichen axialen Richtung verhindert wird, wie sie auch unter den Fasern verhindert wird.

8. Verfahren zur Herstellung eines Moduls nach Anspruch 1, dadurch gekennzeichnet, daß Hohlfasern unter Herstellung eines Faserbündels gewickelt werden, und daß nach der Wicklung ein Ende des Faserbündels in eine Form eingesetzt wird, und daß eine Wärmehärtungs-Potting-Verbindung Schritt für Schritt in das Faserbündel in der Form eingeführt, wird, damit die Potting-Verbindung die Zwischenräume im Bündel ausfüllt und das Ende des Bündels in der Potting-Verbindung einkapselt, und daß danach die Potting-Verbindung durchgeschnitten wird, um Teile der Verbindung zu entfernen, um die gennannte Zugangsfläche und Nicht-Zugangsfläche vorzusehen, und daß das Durchschneiden der Potting-Verbindung zu einer Zeit, während des Härtungszyklus der Potting-Verbindung vor ihrem letzten Aushärten stattfindet.

**Revendications**

1. Module de séparation à filaments creux comprenant en combinaison un faisceau de filaments (22) constitué de plusieurs couches de filaments creux semi-perméables, chaque couche étant disposée en hélice, une enceinte (32, 34) résistant à la pression, renfermant le faisceau, des première et seconde plaques extrêmes (36, 38) situées aux extrémités de l'enceinte, les filaments ayant des extrémités ouvertes et des tronçons principaux, des premiers moyens d'écoulement (44, 56) provoquant l'écoulement d'un fluide en contact avec les surfaces extérieures des tronçons principaux desdits filaments, des seconds moyens d'écoulement provoquant l'écoulement d'un fluide à l'intérieur des filaments creux et à travers leurs extrémités ouvertes, les seconds moyens d'écoulement comprenant un composé d'enrobage (66) recouvrant les extrémités ouvertes des filaments, une chambre collectrice (71) adjacente au composé d'enrobage, une surface d'accès (79) formée sur ledit composé d'enrobage (66), surface d'accès dans laquelle lesdites extrémités ouvertes desdits filaments apparaissent, et une surface (67) de non-accès prévue sur ledit composé d'enrobage pour former une surface résistant à la pression, qui est sensiblement perpendiculaire à la direction des forces dues à la pression interne agissant sur ledit composé d'enrobage (66) afin de résister auxdites forces de la pression interne qui sont développées dans le module pendant l'utilisation, ladite surface (67) de non-accès résistant à la pression étant espacée desdites extrémités ouvertes desdits filaments qui sont à des hauteurs différentes par rapport à ladite surface (67), l'aire totale additionnée de la surface d'accès (79), lorsqu'elle est projetée sur un plan perpendiculaire à la direction desdites forces de la pression interne appliquées audit composé d'enrobage, étant inférieure à 50% de l'aire de ladite surface de non-accès et ladite surface non-accès étant appliquée contre une face ou des faces situées à l'intérieur de ladite enceinte pour opposer ladite résistance auxdites forces de la pression interne.

2. Module selon la revendication 1, dans lequel lesdites extrémités ouvertes forment un angle avec ladite surface (67) résistant à la pression.

3. Module selon la revendication 1 ou la revendication 2, dans lequel le composé d'enrobage (66) qui transmet la pression interne, fait directement face à ladite seconde plaque extrême (38).

4. Module selon la revendication 1, dans lequel la surface résistant à la pression est une surface extrême (67) et dans lequel la surface d'accès est formée de plusieurs entailles réalisées dans ledit composé d'enrobage à partir de ladite surface extrême, vers le haut et vers l'extérieur, exposant lesdites extrémités ouvertes à ladite chambre collectrice.

5. Module selon la revendication 4, dans lequel ladite surface extrême (67) bute contre ladite seconde plaque extrême.

6. Procédé de fabrication d'un module selon la revendication 1, consistant à enrouler les filaments creux pour produire un faisceau et, après l'enroulement, à recouvrir une première extrémité du faisceau d'un composé d'enrobage et à couper des filaments à l'intérieur du composé pour produire des extrémités de filaments, en même temps que des parties du composé sont retirées pour exposer les extrémités coupées des filaments afin de former une surface d'accès dans laquelle lesdites extrémités coupées des filaments apparaissent, et une surface de non-accès (67) ménagée dans ledit composé d'enrobage pour former une surface résistant à la pression, qui est sensiblement perpendiculaire à la direction des forces de la pression interne agissant contre ledit composé d'enrobage (66), afin de résister auxdites forces de la pression interne qui sont développées dans le module pendant l'utilisation, ladite surface de non-accès (67) résistant à la pression étant espacée desdites extrémitès ouvertes desdits filaments qui sont à des hauteurs différentes de ladite surface (67), l'aire totale additionnée de la surface d'accès (79), lorsqu'elle est projectée sur un plan perpendiculaire à la direction desdites forces de la pression interne exercées contre ledit composé d'enrobage, étant inférieure à 50% de l'aire de ladite surface de non-accès et ladite surface de non-accès portant contre une ou plusieurs faces situées à l'intérieur de ladite enceinte pour opposer ladite résistance auxdites forces de pression interne, et dans lequel, pendant l'enroulement des filaments, un dépôt d'un mastic caoutchouteux est réalisé sensiblement dans la même position axiale dans le faisceau afin que, à la fin de l'enroulement du faisceau, il existe à l'intérieur de ce dernier un bouchon formé par le mastic, séparant les tronçons des filaments qui sont ensuite enrobés dans le composé de la partie restante de leurs longueurs afin de s'opposer à toute migration indésirable du composé d'enrobage non mûri par capillarité entre les filaments pendant l'enrobage.

7. Procédé selon la revendication 6, dans lequel, avant l'enroulement, un manchon expansible est fixé sur un mandrin d'enroulement pour supporter la surface intérieure du faisceau et l'adhésif est appliqué sur une zone du manchon afin qu'une migration du composé d'enrobage dans le manchon soit bloquée dans la même position axiale que celle où il est retenu entre les filaments.

8. Procédé de fabrication d'un module selon la revendication 1, consistant à enrouler les filaments creux pour produire le faisceau de filaments et, après l'enroulement, à insérer une première extrémité du faisceau de filaments dans un moule, à introduire un composé d'enrobage durcissant à chaud, graduellement à l'intérieur du faisceau de filaments dans le moule pour que le composé d'enrobage remplisse les interstices du faisceau et que l'extrémité du faisceau soit recouverte du composé d'enrobage, puis à couper le composé d'enrobage pour éliminer certaines parties du composé afin de former lesdites surfaces d'accès et de non-accès, la coupe du composé d'enrobage s'effectuant à un moment du cycle de maturation du composé d'enrobage précédant son durcissement final.

FIG.1

FIG.3

FIG·2

**FIG.4**

40

40

32

26b

22

28

26a

40

40

**FIG.5**

40

40

32

36

48

40

40

FIG.6

*26*

*68*

*26*

*68*

FIG.7

*26*

*23*

*68*

FIG.8

*26b*

*26a*

*68*

*22*

FIG.9

0 038 611

**FIG. 10**

**FIG.11**

**FIG.12**

**FIG.13**

5

FIG.14

30    26a    26b    22

FIG.15

72    70    74    66

0038611

FIG.16

FIG.17

7